# FASCICULE DE BREVET EUROPEEN

(11) **EP 0 870 893 B1**
(45) Date de publication et mention de la délivrance du brevet: **07.09.2005**
(21) Numéro de dépôt: 98400871.4
(22) Date de dépôt: 09.04.1998
(51) Int. Cl.: E06B 3/54, E06B 3/663

(54) **Elément vitré à haut pouvoir isolant**
Starkisolierendes Verglasungselement
HIGHLY INSULATING GLAZING ELEMENT

(30) Priorité: 11.04.1997 FR 9704509
(43) Date de publication de la demande: 14.10.1998
(73) Titulaire: SAINT-GOBAIN GLASS FRANCE, 92400 Courbevoie (FR)
(72) Inventeur: Demars, Yves, 60600 Clermont (FR); Poix, René, 60400 Noyon (FR)
(74) Mandataire: Muller, René

(56) Documents cités:
- EP-A- 0 301 617
- WO-A-95/01493
- WO-A-96/22443
- US-A- 4 893 443

## Description

L'invention concerne un élément vitré à haut pouvoir isolant destiné à être fixé sur une structure porteuse.

Elle s'intéresse plus particulièrement à la fixation d'éléments vitrés à haut pouvoir isolant sur une structure porteuse par une technique consistant à fixer lesdits éléments non par leur pourtour à l'aide d'un cadre périphérique mais par des points d'accrochage mécanique situés usuellement à chacun de leur coin.

Ces éléments vitrés ainsi fixés sont connus sous le terme de V.E.A. (Vitrages Extérieurs Accrochés) ou encore parfois désignés sous le terme anglais "structural glazing". Ce type de montage, très discret, permet ainsi d'obtenir par exemple, des façades de bâtiments entièrement constituées d'éléments vitrés, les uns transparents pour jouer le rôle de vitrages-vision, les autres opaques, faisant en général fonction d'allèges. De telles façades présentent un minimum de discontinuité de surface vues de l'extérieur.

Cependant la recherche de l'esthétisme ne doit pas se faire au détriment de la fiabilité de la fixation, et la conception de ces liaisons par points doit prendre en compte différentes exigences du point de vue mécanique. Ainsi ces liaisons doivent bien sur garantir une fixation transversale entre l'élément vitré et la structure porteuse qui soit solide et efficace et, en particulier, supporter sans risque de casse le poids de l'élément vitré. Mais, par ailleurs, l'élément vitré, une fois posé, doit être capable de "répondre" sans se rompre à des sollicitations de diverses natures et, tout particulièrement à des contraintes qui vont avoir tendance à le fléchir, créés par exemple par des conditions atmosphériques de type vents. Les liaisons ont donc à autoriser un fléchissement de quelques degrés, de l'élément vitré.

Il est usuel pour obtenir une isolation thermique et/ou acoustique de réaliser des vitrages isolants comportant deux substrats séparés l'un de l'autre par une lame d'air relativement importante dont l'étanchéité est assurée par un joint périphérique de manière connue.

Chacun des substrats peut être une plaque de verre unitaire ou présenter une structure feuilletée. Mais il est à noter que la technique habituelle de "structural glazing" implique, dans le cas de tels vitrages multiples, qu'en général, un seul des substrats soit uni à la structure porteuse par un système de fixation, ce qui soulève un point particulièrement épineux : en effet, cela signifie que les autres substrats qui sont associés à ce substrat fixé risquent, ne serait-ce que sous l'effet de leur propre poids, de soumettre les joints périphériques, précédemment évoqués, à rudes épreuves ; car ceux-ci, ne garantissant que l'étanchéité de l'ensemble, ne sont absolument pas étudiés pour résister à de fortes contraintes en cisaillement.

Il est donc important, dans le cas de vitrages multiples, de prévoir des liaisons entre les substrats permettant d'alléger ces contraintes au niveau des joints, lesdites liaisons ayant alors pour objet de reporter au moins une partie du poids de chaque substrat non fixé à la structure sur le substrat qui y est fixé.

Différents montages de vitrages dits V.E.A. ont déjà été proposés. Ainsi dans les demandes de brevets EP-A-O 506 522 et EP-A-O 655 543 sont décrits des systèmes de liaison mécanique entre des vitrages dits V.E.A. et leur structure porteuse qui permettent d'"accrocher" de manière sure l'élément vitré à sa structure tout en lui conservant une capacité à fléchir de manière durable et contrôlée et en cas de vitrages multiples, ces systèmes permettent également de recentrer tous les orifices successifs percés dans chacune des vitres desdits vitrages, ceci à l'aide d'un système de bagues excentrées dans l'un desdits orifices. La flexibilité du vitrage, grâce à ces types de liaisons, est garantie mais la fabrication de ces systèmes de fixations est assez exigeante car il faut assurer une adéquation parfaite entre les différents éléments. Une grande précision quant au dimensionnement est donc nécessaire ce qui entraîne des coûts de fabrication élevés et une complexité de fabrication importante.

Par ailleurs, les vitrages isolants usuels apportent une isolation thermique jugée insatisfaisante pour certaines applications. Pour y remédier, il est connu de réaliser des vitrages comportant trois feuilles de verre et l'une des lames d'air pouvant être remplacée par un gaz tel que le Krypton. Ces vitrages ont des propriétés d'isolation thermique nettement améliorées, mais sont d'une épaisseur et d'un poids tels qu'il n'est pas aisé de les utiliser en particulier dans des montages du type V.E.A.

Le but de l'invention est alors de pallier à ces inconvénients en proposant un nouveau type de vitrages à haut pouvoir isolant, dits V.E.A. dont l'"accrochage" à la structure porteuse est sûre tout en conservant une capacité à fléchir de manière durable, dont l'épaisseur et le poids sont relativement faibles et dont le système de fixation n'est pas pénalisant en termes de coût et de complexité de fabrication.

L'invention a pour objet un élément vitré à haut pouvoir isolant selon la revendication 1. Cet élément vitré est composé d'au moins deux feuilles de verre entre lesquelles un vide a été réalisé, séparées l'une de l'autre par des plots répartis sur toute la surface, réunies à leur périphérie par un joint de scellage minéral, cet élément vitré présentant au moins un trou, ledit trou étant scellé à sa périphérie de manière étanche à l'aide d'un joint de scellage minéral.

L'invention substitue donc aux vitrages isolants classiques un vitrage isolant constitué d'au moins deux feuilles de verre entre lesquelles un vide a été réalisé. Le vitrage isolant présente pour une épaisseur totale plus faible que celle des vitrages isolants classiques des propriétés d'isolation thermique nettement améliorées.

La demande de brevet EP-A-0 645 516 décrit un vitrage isolant composé de deux feuilles de verre séparées l'une de l'autre par un faible espace dans lequel le vide a été réalisé. Les feuilles de verre sont séparées l'une de l'autre par des plots répartis sur toute la surface et réunies à leurs périphéries par un joint de scellage minéral. La structure d'un tel vitrage lui confère une rigidité et une tenue équivalentes à celles d'un vitrage monolithique d'épaisseur égale à la somme des épaisseurs des feuilles de verre, c'est-à-dire que les feuilles de verre se comportent comme une seule. Il est donc avantageux d'employer ce type de vitrage dans des montages de type V.E.A. du fait que leur comportement mécanique, et donc leur capacité à fléchir, est contrôlable.

Selon un mode de réalisation de l'invention, le joint de scellage périphérique du trou présente au moins la même résistance mécanique que le joint de scellage périphérique de l'élément vitré.

Selon un mode préféré de réalisation de l'invention, le joint de scellage périphérique du trou présente la même tenue à la compression que le joint de scellage périphérique de l'élément vitré et selon un autre mode préféré de réalisation, il présente la même résistance au cisaillement que le joint de scellage périphérique de l'élément vitré.

De cette manière, la présence d'un tel joint de scellage entre les deux feuilles de verre à l'emplacement de la pièce de fixation, permet de réaliser un serrage de l'élément vitré aussi efficace et simple qu'avec un vitrage monolithique. L'élément vitré selon l'invention permet ainsi d'employer un montage mécanique pour l'accrochage plus simple et plus facile à réaliser que dans le cas des vitrages isolants usuels.

Selon une variante de l'invention, les feuilles de verre de l'élément vitré subissent avantageusement un traitement de trempe. Cette trempe permet de renforcer la résistance des feuilles de verre lors de la réalisation du vide, ainsi que la résistance globale de l'élément vitré dans ses diverses applications.

Sous un des aspects de l'invention, les feuilles de verre de l'élément vitré ont une épaisseur de 2 millimètres. L'élément vitré ainsi obtenu a un comportement mécanique équivalent à celui d'un vitrage monolithique d'épaisseur 4 millimètres. Ce type d'élément vitré présente avantageusement une faible épaisseur pour des propriétés d'isolation thermique nettement améliorées.

D'autre part, au moins l'une des feuilles de verre comporte avantageusement une couche basse émissive sur une face interne, c'est-à-dire sur une face en contact avec les plots. Cette couche peut contribuer à la fonction d'isolation thermique.

L'élément vitré selon l'invention est muni d'au moins un ensemble de fixation pour accrocher ledit élément vitré à une structure porteuse.

Selon un premier mode de réalisation, l'ensemble de fixation passe au travers d'un trou ménagé dans l'élément vitré et la forme dudit trou est telle que l'ensemble de fixation est serré sur l'ensemble des feuilles de verre constituant l'élément vitré. Ce type de réalisation est permis grâce à la structure de l'élément vitré et en particulier à son comportement mécanique équivalent à celui d'un vitrage monolithique.

Selon un second mode de réalisation, l'ensemble de fixation passe au travers d'un trou ménagé dans l'élément vitré et la forme dudit trou est telle que l'ensemble de fixation est serré sur une seule des feuilles de verre constituant l'élément vitré. Cette réalisation est possible grâce aux propriétés mécaniques des joints de scellage. En effet, bien que leur fonction principale est de garantir l'étanchéité de l'ensemble, ils sont étudiés pour résister à de fortes contraintes en cisaillement et en compression afin d'éviter leur détérioration lors de la réalisation du vide de l'ensemble.

Avantageusement, quelque soit le mode de réalisation choisi, la face frontale de l'ensemble de fixation est au même niveau que l'une des faces externes de l'élément vitré, on dit que l'accrochage est alors du type affleurant. Une fois ainsi fixé, l'élément vitré parait, vu de l'extérieur, dépourvu de tout élément de fixation "débordant", ce qui est particulièrement esthétique.

L'invention a également pour objet l'utilisation de l'élément vitré prédéfini.

Une première utilisation concerne la constitution de façades de bâtiment de grandes surfaces.

Une seconde utilisation concerne la constitution de portes ou de parois d'enceinte climatique. Ce type d'application présente l'avantage de réaliser, pour une faible épaisseur de parois, une isolation thermique très élevée et très bonne pour ce genre d'utilisation, isolation thermique qui ne peut être obtenue avec les vitrages isolants habituels ayant une épaisseur globale répondant aux critères d'encombrement et de visibilité.

Une troisième utilisation envisagée concerne la constitution de toitures, les éléments vitrés faisant office de tuiles ou panneaux de recouvrement.

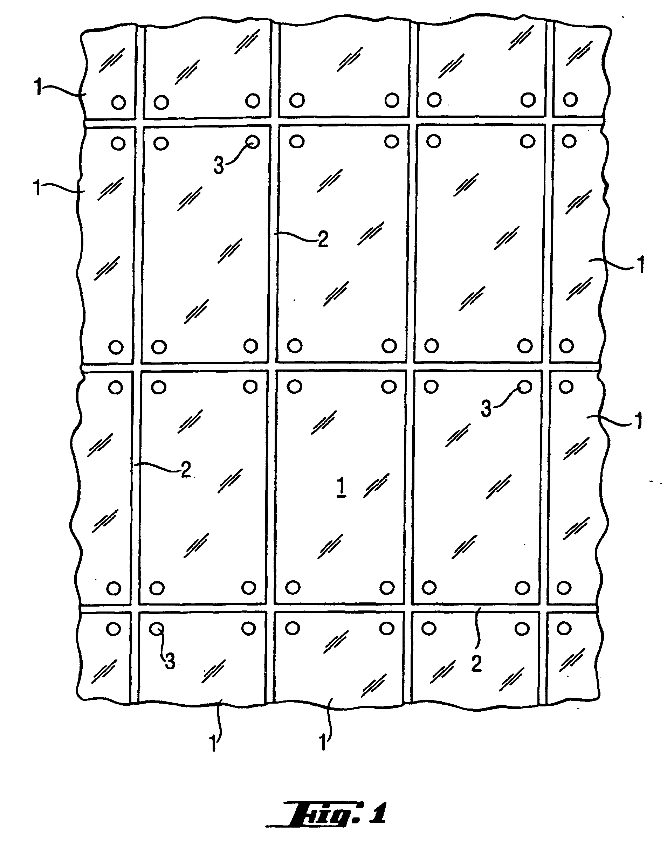

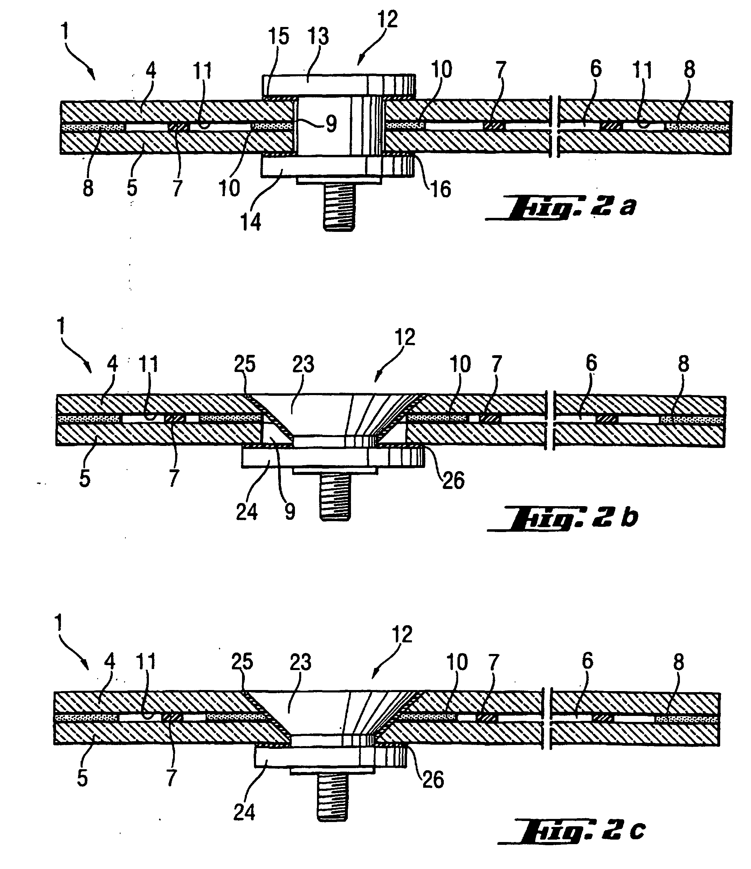

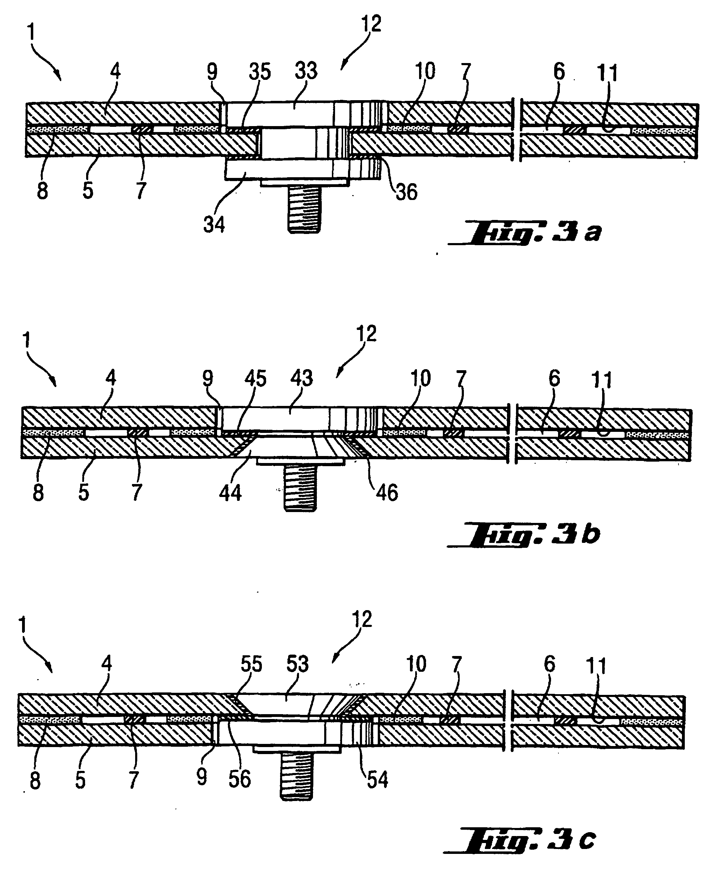

Les caractéristiques avantageuses de l'invention apparaîtront plus clairement dans la description détaillée ci-après d'exemples de réalisation non limitatifs illustrés par les figures qui représentent :
. **Fig 1 :** une vue de l'extérieur d'une façade équipée d'éléments vitrés à haut pouvoir isolant, accrochés par des points d'accrochage mécaniques.
. **Fig 2 a, b, c** : coupes transversales d'éléments vitrés à haut pouvant isolant munis d'un ensemble de fixation serré sur l'ensemble des feuilles de verre.
. **Fig 3 a, b, c** : coupes transversales d'éléments vitrés à haut pouvoir isolant munis d'un ensemble de fixation serré sur une des feuilles de verre.

On précise que les proportions entre les divers éléments représentés ne sont pas rigoureusement respectées dans ces figures afin d'en faciliter la lecture.

**La figure 1** représente une vue partielle d'une façade constituée d'éléments vitrés 1 à haut pouvoir isolant séparés par des joints 2 compressibles et de faible largeur, chacun des éléments vitrés 1 étant fixé mécaniquement à la structure porteuse à ses quatre coins par des points d'accrochage 3 de manière à ce que la surface extérieure ne présente globalement aucun élément débordant. Des endroits de fixation autres que situés dans les coins sont également possibles.

**L'ensemble des figures 2 et 3** représente un élément vitré 1 dont la forme du trou 9 varie en fonction du mode d'accrochage désiré. Cet élément vitré 1 est constitué de deux feuilles de verre 4 et 5 entre lesquelles un vide 6 a été réalisé, séparées une de l'autre par des plots 7 répartis sur toute la surface et réunies à leur périphérie par un joint de scellage minéral 8. L'élément vitré présente un trou 9 scellé à sa périphérie par un joint de scellage minéral 10. Les feuilles de verre 4 et 5 ont chacune une épaisseur de 4 millimètres.

Selon cette représentation, la feuille de verre 4 est revêtue sur sa face interne d'une couche basse-émissive 11. Cette couche est par exemple du type de celle décrite dans le brevet français n° 2 701 474 déposé au nom de Saint-Gobain Vitrage International. Les plots 7 ont une épaisseur de 0,2 millimètre et un diamètre de 0,4 millimètre. Ils sont répartis sur toute la surface des feuilles de verre et sont distants les uns des autres de 30 millimètres.

Ces plots 7 sont déposés sur une des feuilles de verre 4 et 5 après que celles-ci aient été revêtues d'une couche basse-émissive 11, par exemple par pyrolyse, façonnées séparément pour former le trou 9, puis trempées. Après dépôt d'un cordon de fritte de verre à la périphérie de la deuxième feuille de verre et du trou de celle-ci, les deux feuilles de verre sont assemblées de sorte que les deux trous se trouvent en vis-à-vis pour former le trou 9, puis on effectue un traitement thermique de l'ensemble pour réaliser la soudure des deux feuilles de verre 4 et 5, les joints de scellage 8 et 10 réalisant alors l'étanchéité de l'ensemble. On réalise alors le vide entre les deux feuilles 4 et 5 par tous moyens connus de l'homme de métier, tels que par exemple par le procédé décrit dans la demande de brevet française déposée au nom de Saint-Gobain Vitrage sous le numéro 96/09 632 (=FR_A_2752012). L'élément vitré 1 est alors prêt à être utilisé.

**La figure 2a** montre un premier mode de réalisation d'un élément vitré 1 muni d'un ensemble de fixation 12 serré sur les deux feuilles de verre 4 et 5. L'ensemble de fixation 12 est constitué d'une vis 13 s'insérant dans le trou 9, d'un élément de blocage/serrage 14 et de rondelles 15 et 16 en matériau plus tendre que celui de la vis 13, tel que par exemple en aluminium, la vis 13 étant de préférence en inox.

Au niveau du trou 9 de l'élément vitré 1, la feuille de verre 4 est percée d'un trou circulaire et la feuille de verre 5 est percée d'un trou circulaire de même diamètre et centré sur le précédent.

La vis 13 en inox à tête cylindrique de diamètre supérieure à celui du trou 9, traverse l'élément vitré 1. La tête de la vis 13 vient en appui sur la surface de la feuille de verre 4 avec interposition de la rondelle 15 permettant d'obtenir un meilleur contact sans risque de dégradation du bord du trou de la feuille de verre 4. L'élément de blocage/serrage 14 se visse sur la vis 13 et se plaque sur la feuille de verre 5 par l'intermédiaire de la rondelle 16. L'ensemble de fixation 12 est alors serré sur les deux feuilles de verre 4 et 5 en contact l'une avec l'autre par l'intermédiaire du joint de scellage 10 dont les propriétés mécaniques lui permettent de résister aux forces de pression exercées par l'ensemble de fixation 12. Ce type de montage est le plus facile à réaliser, mais présente l'inconvénient de ne pas être de type affleurant.

**La figure 2b** montre un second mode de réalisation d'un élément vitré 1 muni d'un ensemble de fixation 12 serré sur les deux feuilles de verres 4 et 5. L'ensemble de fixation 12 est constitué d'une vis 23 en inox s'insérant dans le trou 9, d'un élément de blocage/serrage 24 et de rondelles 25 et 26 en aluminium.

Au niveau du trou 9 de l'élément vitré 1, la feuille de verre 4 est percée d'un trou circulaire fraisé et la feuille de verre 5 est percée d'un trou circulaire non fraisé de diamètre identique au diamètre intérieur du trou précédent et centré sur celui-ci.

La vis 23 à tête conique traverse l'élément vitré 1 et vient en appui sur la feuille de verre 4 de manière à affleurer la surface extérieure de celle-ci, la rondelle 25 étant interposée entre la feuille de verre 4 et la tête de la vis 23. L'élément de blocage/serrage 24 se visse sur la vis 23 et se plaque sur la feuille de verre 5 par l'intermédiaire de la rondelle 26. L'ensemble de fixation 12 est alors serré sur les deux feuilles de verre 4 et 5 en contact l'une avec l'autre par l'intermédiaire du joint de scellage 10.

**La figure 2c** montre un troisième mode de réalisation d'un élément vitré 1 muni d'un ensemble de fixation 12 serré sur les deux feuilles de verre 4 et 5. L'ensemble de fixation 12 est identique à celui de la figure 2b.

Au niveau de trou 9 de l'élément vitré 1, la feuille de verre 4 est perchée d'un trou circulaire fraisé et la feuille de verre 5 est percée d'un trou circulaire fraisé de diamètre inférieur centré sur le précédent de sorte que lorsque les deux feuilles 4 et 5 sont réunies par l'intermédiaire du joint de scellage 10, la surface interne du trou 9 forme une surface régulièrement conique. La tête de la vis 23 vient en appui par l'intermédiaire de la rondelle 25 sur la surface du trou 9, de manière à affleurer la surface extérieure de la feuille de verre 4. L'élément de blocage/serrage 24 se visse sur la vis 23 et se plaque sur la feuille de verre 5 par l'intermédiaire de la rondelle 26. L'ensemble de fixation 12 est alors serré sur les deux feuilles de verre 4 et 5 en contact l'une avec l'autre par l'intermédiaire du joint de scellage 10.

Avantageusement, par rapport au montage de la figure 2b, le contact tête de vis et élément vitré 1 offre une meilleure répartition des forces générées par le serrage de l'ensemble de fixation 12.

**La figure 3a** montre un premier mode de réalisation d'un élément vitré 1 muni d'un ensemble de fixation 12 serré sur une des deux feuilles de verre 4 et 5 constituant l'élément vitré 1. L'ensemble de fixation 12 est constitué d'une vis 33 en inox s'insérant dans le trou 9, d'un élément de blocage/serrage 34 et de rondelles 35 et 36 en aluminium.

Au niveau du trou 9 de l'élément vitré 1, la feuille de verre 4 est percée d'un trou circulaire et la feuille de verre 5 est percée d'un trou circulaire de diamètre inférieur et centré sur le précédent. La vis 33 à tête cylindrique de diamètre Inférieur à celui du trou de la feuille de verre 4 et supérieur à celui de la feuille de verre 5, traverse l'élément vitré 1. La tête de la vis 33 vient en appui sur la surface interne de la feuille de verre 5 par intermédiaire de la rondelle 35. L'élément de blocage/serrage 34 se visse sur la vis 33 et se plaque sur la feuille de verre 5 côté externe par l'intermédiaire de la rondelle 36. L'ensemble de fixation 12 est alors serré sur la feuille de verre 5, la hauteur de la tête de la vis 33 étant tel que la face frontale de celle-ci est au même niveau que la surface extérieure de la feuille de verre 4. Ce type de montage est facile à réaliser et présente l'avantage d'être de type affleurant.

**La figure 3b** montre un second mode de réalisation d'un élément vitré 1 muni d'un ensemble de fixation 12 serré sur rune des deux feuilles de verre 4 et 5 constituant l'élément vitré 1. L'ensemble de fixation 12 est constitué d'une vis 43 en inox s'insérant dans le trou 9, d'un élément de blocage/serrage 44 et de rondelles 45 et 46 en aluminium.

Au niveau du trou 9 de l'élément vitré 1, la feuille de verre 4 est percée d'un trou circulaire et la feuille de verre 5 est percée d'un trou circulaire fraisé centré sur le précédent et dont le diamètre extérieur est inférieur au diamètre du trou de la feuille de verre 4. La vis 43 à tête cylindrique de diamètre inférieur au diamètre du trou de la feuille de verre 4 et supérieur au diamètre externe du trou de la feuille de verre 5, traverse élément vitré 1. La tête de vis 43 vient en appui sur la surface interne de la feuille de verre 5 par l'intermédiaire de la rondelle 45. L'élément de blocage/serrage 44 de forme conique se visse sur la vis 43 et vient en appui sur la feuille de verre 5 de manière à affleurer la surface extérieure de celle-ci, la rondelle 26 étant interposé entre la feuille de verre 5 et l'élément de blocage/serrage 44. L'ensemble de fixation 12 est alors serré sur la feuille de verre 5, la hauteur de la tête de la vis 43 étant tel que la face frontale de celle-ci est au même niveau que la surface extérieure de la feuille de verre 4.

**La figure 3c** montre un troisième mode de réalisation d'un élément vitré 1 muni d'un ensemble de fixation 12 serré sur une des deux feuilles de verre 4 et 5 constituant l'élément vitré 1. L'ensemble de fixation 12 est constitué d'une vis 53 en inox à tête conique s'insérant dans le trou 9, d'un élément de blocage/serrage 54 et de rondelles 55 et 56 en aluminium.

Au niveau du trou 9 de l'élément vitré 1, la feuille de verre 4 est percée d'un trou circulaire fraisé et la feuille de verre 5 est percée d'un trou circulaire centré sur le précédent et dont le diamètre est supérieur au diamètre externe du trou de la feuille de verre 4. La vis 53 à tête conique vient en appui sur la feuille de verre 4 de manière à affleurer la surface extérieure de celle-ci, la rondelle 55 étant interposée entre la feuille de verre 4 et la tête de la vis 53. L'élément de blocage/serrage 54 se visse sur la vis 53 et se plaque sur la feuille de verre 4 côté interne par l'intermédiaire de la rondelle 56. L'ensemble de fixation 12 est alors serré sur la feuille de verre 4.

Le serrage de l'ensemble de fixation 12 sur une des deux feuilles de verre 4 et 5 de l'élément vitré 1 est d'une manière générale le mode de réalisation le plus simple et le plus facile à mettre en oeuvre. La tenue dans le temps de l'élément vitré 1 accroché est avantageusement assurée par la structure elle-même de celui-ci et plus particulièrement par les propriétés mécaniques des joints de scellage 8 et 10.

Avantageusement, le montage de l'ensemble de fixation sur l'élément vitré peut se faire complètement sur le chantier. Ainsi, il n'existe aucun problème de stockage ou de transports desdits éléments vitrés ceux-ci pouvant être fournis dans leur forme la plus simple, c'est-à-dire sans éléments de fixation. De plus, l'accrochage de ces éléments vitrés est de mise en oeuvre simple.

## Revendications

1. Elément vitré (1) à haut pouvoir isolant composé d'au moins deux feuilles de verre (4, 5) entre lesquelles un vide (6) a été réalisé, séparées l'une de l'autre par des plots (7) répartis sur toute la surface, réunies à leur périphérie par un joint de scellage minéral (8), **caractérisé en ce que** ledit élément vitré (1) est muni d'au moins un ensemble de fixation (12) pour accrocher ledit élément vitré a une structure porteuse, l'ensemble de fixation passant au travers d'un trou (9) ménagé dans l'ensemble des feuilles constituant l'élément vitré (1), **en ce que** ledit élément vitré (1) est scellé à la périphérie du trou de manière étanche à l'aide d'un joint de scellage minéral (10), **et en ce que** la forme de l'ensemble de fixation (12) et du trou (9) sont telles que l'ensemble de fixation est serré sur une ou sur l'ensemble des feuilles de verre constituant l'élément vitré (1).

2. Elément vitré (1) selon la revendication 1, **caractérisé en ce que** le joint de scellage périphérique (10) du trou (9) présente au moins la même résistance mécanique que le joint de scellage périphérique (8) de l'élément vitré (1).

3. Elément vitré (1) selon la revendication 2, **caractérisé en ce que** le joint de scellage périphérique (10) du trou (9) présente la même tenue à la compression que le joint de scellage périphérique (8) de l'élément vitré (1).

4. Elément vitré (1) selon la revendication 2 ou 3, **caractérisé en ce que** le joint de scellage périphérique (10) du trou (9) présente la même résistance au cisaillement que le joint de scellage périphérique (8) de l'élément vitré (1).

5. Elément vitré (1) selon l'une des revendications précédentes, **caractérisé en ce que** les feuilles de verre (4, 5) sont trempées.

6. Elément vitré (1) selon l'une des revendications précédentes, **caractérisé en ce que** les feuilles de verre (4, 5) ont une épaisseur minimale de 2 millimètres.

7. Elément vitré (1) selon l'une des revendications précédentes, **caractérisé en ce qu'au** moins une des feuilles de verre (4, 5) possède une couche basse émissive (11) sur sa face en contact avec les plots (7).

8. Elément vitré (1) selon l'une des revendications précédentes, **caractérisé en ce que** l'accrochage est du type affleurant.

9. Utilisation de l'élément vitré(1) selon l'une des revendications précédentes, pour la constitution de façades de bâtiment.

10. Utilisation de l'élément vitré (1) selon l'une des revendications 1 à 8, pour la constitution de portes ou de parois d'enceinte climatique.

11. Utilisation de l'élément vitré (1) selon l'une des revendications 1 à 8, pour la constitution de toitures.

## Patentansprüche

1. Glaselement (1) mit hohem Isoliervermögen, das sich aus mindestens zwei Glasscheiben (4, 5) zusammensetzt, zwischen denen ein Vakuum (6) erzeugt worden ist und welche durch über die gesamte Fläche verteilte Stifte (7) voneinander getrennt und an ihrem Umfang durch eine anorganische Dichtung (8) miteinander verbunden sind, **dadurch gekennzeichnet, dass das** Glaselement (1), um es in einer Tragstruktur zu verankern, mit mindestens einer Befestigungseinheit (12) versehen ist, die durch ein Loch (9) hindurchgeht, das in der Gesamtheit der das Glaselement (1) bildenden Glasscheiben angebracht ist, **dass** das Glaselement (1) am Umfang des Lochs mittels einer anorganischen Dichtung (10) abgedichtet ist, **und dass** die Form von Befestigungseinheit (12) und Loch (9) derart ist, dass die Befestigungseinheit auf einer oder allen das Glaselement (1) bildenden Glasscheiben festgezogen wird.

2. Glaselement (1) nach Anspruch 1, **dadurch gekennzeichnet, dass** die Umfangsdichtung (10) des Lochs (9) wenigstens dieselbe mechanische Widerstandsfähigkeit wie die Umfangsdichtung (8) des Glaselements (1) besitzt.

3. Glaselement (1) nach Anspruch 2, **dadurch gekennzeichnet, dass** die Umfangsdichtung (10) des Lochs (9) dieselbe Druckfestigkeit wie die Umfangsdichtung (8) des Glaselements (1) besitzt.

4. Glaselement (1) nach Anspruch 2 oder 3, **dadurch gekennzeichnet, dass** die Umfangsdichtung (10) des Lochs (9) dieselbe Scherfestigkeit wie die Umfangsdichtung (8) des Glaselements (1) besitzt.

5. Glaselement (1) nach einem der vorhergehenden Ansprüche, **dadurch gekennzeichnet, dass** die Glasscheiben (4, 5) vorgespannt worden sind.

6. Glaselement (1) nach einem der vorhergehenden Ansprüche, **dadurch gekennzeichnet, dass** die Mindestdicke der Glasscheiben (4, 5) 2 Millimeter beträgt.

7. Glaselement (1) nach einem der vorhergehenden Ansprüche, **dadurch gekennzeichnet, dass** mindestens eine der Glasscheiben (4, 5) auf der Seite, die sich mit den Stiften (7) in Berührung befindet, eine niedrig emittierende Schicht (11) besitzt.

8. Glaselement (1) nach einem der vorhergehenden Ansprüche, **dadurch gekennzeichnet, dass** die Verankerung bündig abschließt.

9. Verwendung des Glaselements (1) nach einem der vorhergehenden Ansprüche zur Herstellung von Gebäudefassaden.

10. Verwendung des Glaselements (1) nach einem der Ansprüche 1 bis 8 zur Herstellung von Türen oder Wänden von klimatisierten Behältern.

11. Verwendung des Glaselements (1) nach einem der Ansprüche 1 bis 8 zur Herstellung von Dächern.

## Claims

1. Glazed element (1) having a high insulating power composed of at least two glass sheets (4, 5), between which a vacuum (6) has been created, separated from each other by mounts (7) distributed over the entire surface, these sheets being joined together around their periphery by an inorganic seal (8), **characterized in that** the said glazed element (1) is provided with at least one fastening unit (12) for bolting the said glazed element to a bearing structure, the fastening unit going through a hole (9) made in all of the glass sheets of which the glazed element (1) is composed, **in that** the said glazed element (1) is sealed in a vacuum-tight manner around the periphery of the hole with the aid of an inorganic seal (10) and **in that** the shape of the fastening unit (12) and of the hole (9) are such that the fastening unit is clamped to one or all of the glass sheets of which the glazed element (1) is composed.

2. Glazed element (1) according to Claim 1, **characterized in that** the peripheral seal (10) of the hole (9) has at least the same mechanical strength as the peripheral seal (8) of the glazed element (1).

3. Glazed element (1) according to Claim 2, **characterized in that** the peripheral seal (10) of the hole (9) has the same compressive strength as the peripheral seal (8) of the glazed element (1).

4. Glazed element (1) according to Claim 2 or 3, **characterized in that** the peripheral seal (10) of the hole (9) has the same shear strength as the peripheral seal (8) of the glazed element (1).

5. Glazed element (1) according to one of the preceding claims, **characterized in that** the glass sheets (4, 5) are tempered.

6. Glazed element (1) according one of the preceding claims, **characterized in that** the glass sheets (4, 5) have a minimum thickness of 2 millimetres.

7. Glazed element (1) according to one of the preceding claims, **characterized in that** at least one of the glass sheets (4, 5) has a low-emissivity coating (11) on its face in contact with the mounts (7).

8. Glazed element (1) according to one of the preceding claims, **characterized in that** the bolting is of the flush type.

9. Use of the glazed element (1) according to one of the preceding claims for the construction of curtain walling for buildings.

10. Use of the glazed element (1) according to one of Claims 1 to 8 for the construction of doors or walls of environmental chambers.

11. Use of the glazed element (1) according to one of Claims 1 to 8 for the construction of roofing.
